Europäisches Patentamt

**European Patent Office**

Office européen des brevets

(19)

(11) Veröffentlichungsnummer: **0 065 758**

**A2**

(12)     **EUROPÄISCHE PATENTANMELDUNG**

(21) Anmeldenummer: **82104404.7**

(22) Anmeldetag: **19.05.82**

(51) Int. Cl.³: **C 04 B 21/00**
         **C 04 B 25/02**

(30) Priorität: **22.05.81 DE 3120488**

(43) Veröffentlichungstag der Anmeldung:
      **01.12.82 Patentblatt 82/48**

(84) Benannte Vertragsstaaten:
      **AT BE CH FR GB IT LI LU NL**

(71) Anmelder: **Stotmeister GmbH**

**D-78940 Stuhlingen-Weizen(DE)**

(72) Erfinder: **Rheinländer, Heinz**
      **Wiessenweg 4a**
      **D-8044 Unterschleissheim-Lohhof(DE)**

(74) Vertreter: **Patentanwälte Leinweber & Zimmermann**
      **Rosental 7/II Aufg.**
      **D-8000 München 2(DE)**

(54) **Akustikputz.**

(57) Die Erfindung betrifft einen Akustikputz mit folgenden Bestandteilen:

a)   expandiertes vulkanisches Silikatgestein in grober Körnung von 3 mm aufwärts ohne Feinanteile,

b)   ein Alu-Eisen-Magnesium-Silikat mit einer Struktur aus vielfach gespaltenen Lamellen, welches Silikat in den Hohlräumen des Bestandteils a) angeordnet ist,

c)   als Bindemittel eine Kunstharz-Dispersion, die zu einem physikalischen Abbinden in einem allmählichen Trocknungsvorgang führt.

EP 0 065 758 A2

Croydon Printing Company Ltd.

-1-

# LEINWEBER & ZIMMERMANN

PATENTANWÄLTE

Dipl.-Ing. H. Leinweber (1930-78)
Dipl.-Ing. Heinz Zimmermann
Dipl.-Ing. A. Gf. v. Wengersky

Rosental 7 · D-8000 München 2
2. Aufgang (Kustermann-Passage)
Telefon (089) 2603989
Telex 528191 lepat d
Telegr.-Adr. Leinpat München

19. Mai 1982

Unser Zeichen    WYC

Stotmeister GmbH, 7894 Stühlingen-Weizen

## Akustikputz

Die Erfindung bezieht sich auf einen Akustikputz mit einem Bestandteil in Form expandierten vulkanischen Silikatgesteins und mit einem Bindemittel.

Es ist bekannt, daß expandiertes, also durch Wärmebehandlung geblähtes vulkanisches Silikatgestein, dessen Wassergehalt durch die Wärmeeinwirkung verdampft wurde, eine hohe Schallschluckfähigkeit aufweist. Dabei ist das hohe Schallschluckvermögen eine Folge der zahlreichen Poren bzw. Innenräume des Materials, das durch Hitzeeinwirkung bzw. eine Wärmebehandlung leicht in den hochporigen Zustand überführt werden kann.

- 2 -

Der Akustikputz der eingangs genannten bekannten
Art verwendet allein geblähtes Silikatgestein und ein mineralisches Bindemittel, wie Zement. Der entstehende Akustikputz ist aufgrund des verwendeten Bindemittels nur bedingt
schallschluckfähig. Nachteilig ist auch die Tatsache, daß
die Haftfähigkeit eines derartigen Akustikputzes nur auf mineralischen Untergründen gegeben ist und auch dort nicht
immer problemlos.

Es ist deshalb auch schon bekannt, als Akustikputz
einen aus Asbestfasern und mineralischem Bindemittel bestehenden Putz zu verwenden. Die Schallschluckfähigkeit eines
solchen Akustikputzes ist ausgezeichnet und auch breitbandig
wirksam. Nachteilig bei diesem Akustikputz ist seine bleibend
weiche Beschaffenheit, die die mechanische Beanspruchbarkeit des Putzes ausschließt. Überdies ist die Verwendung des
Asbestputzes wegen der gesundheitsgefährdenden Wirkung von
Asbest mittlerweile verboten.

Schließlich ist es auch bei Edelputzen bekannt, den
Putz statt mit einem mineralischen Binder mit einem Kunstharzbinder zu verarbeiten. Bei Akustikputzen wurden Kunstharzbinder bisher nicht eingesetzt. Eine spezielle Wirkung des
Kunstharzbinders in der Akustik ist nicht bekannt.

Bisher bekannte Akustikputze sind also entweder mineralisch spröde und nicht universell einsetzbar oder weich
und mechanisch nicht beanspruchbar, gegebenenfalls auch gesundheitsschädlich.

- 3 -

Aufgabe der Erfindung ist es deshalb, einen schallschluckenden Putz vorzuschlagen, der bei guter Verarbeitbarkeit und Haftung auf allen tragfähigen Untergründen hohe
Festigkeit bzw. Härte mit breitbandigem Schluckvermögen im
geforderten Frequenzbereich verbindet.

Diese Aufgabe wird erfindungsgemäß durch einen Akustikputz mit folgenden Bestandteilen gelöst:

    a) expandiertes vulkanisches Silikatgestein einer
       körnung von mindestens 3 mm,

    b) ein Alu-Eisen-Magnesium-Silikat,

    c) als Bindemittel eine Kunstharz-Dispersion.

Besonders vorteilhaft kann dem Akustikputz als weiterer
Bestandteil zugesetzt sein

    d) ein Kalisilikat.

Man erkennt zunächst, daß hier expandiertes vulkanisches Silikatgestein mit einer relativ groben Körnung und
insbesondere ohne Feinanteile eingesetzt wird. Als weiterer,
gewichtsprozentmäßig nur etwa mit der Hälfte des erstgenannten Bestandteils vorliegender Bestandteil ist ein Aluminium-
Eisen-Magnesium-Silikat vorgesehen. Aufgrund der groben Körnung
des expandierten Silikatgesteins ohne Feinteile verbleiben
zwischen den einzelnen Körnern dieses in sich sehr porösen
Materials weitere Hohlräume. In diesen Hohlräumen ist der weitere Bestandteil mit seiner etwas andersartigen Struktur aus
vielfach gespaltenen Lamellen angeordnet. Als Bindemittel dient
nun nicht ein mineralischer Binder, sondern eine Kunstharz-
Dispersion. Im Unterschied zu einem mineralischen Binder wie
Kalk oder Zement, die chemisch innerhalb einer bestimmten
Zeit auch dann abbinden, wenn sie naß gehalten werden, erfolgt
bei dieser Materialzusammensetzung das Abbinden physikalisch:

Der Akustikputz härtet ohne jeden chemischen Vorgang durch die Austreibung des Wassers in einem Trocknungsvorgang aus. Dabei erfolgt zweckmäßig keine Zwangstrocknung, sondern ein allmähliches Austreiben des Wassers unter Raumtemperatur in einer längeren Trockenzeit.

Der auf diese Weise zusammengestellte Akustikputz hat folgende Eigenschaften: Er haftet auf allen sauberen, trockenen, trennmittelfreien Untergründen und erlaubt fugenlose Ausstattungen. Er läßt sich also auf bereits beschichtete Flächen (Kunstharzputz, Farbe, mineralische Putze usw.) genau aufbringen, wie auf neue Untergründe, wie Ziegel, Beton usw. Der gut haftende und zu verarbeitende Putz gibt nach Trockung eine vollständig harte, mechanisch beanspruchbare Oberfläche. Die erzielte Festigkeit ist dabei trotz der allein durch physikalische Bindung, also durch Trocknung erzielten Verfestigung noch derjenigen überlegen, die mit chemisch gebundenen Akustikputzen mit mineralischem Bindemittel erzielt werden konnte. Völlig überraschend ergibt sich dennoch eine ausgezeichnete Schallschluckfähigkeit in einem breiten Frequenzband nach Art derjenigen bei Akustikputzen mit Asbest. Erstmalig ist hier in einem Akustikputz die Kombination von Oberflächenhärte nach Trocknung mit breitbandigem Schallschluckvermögen erzielt. Der Akustikputz ist deshalb zur Nachhallregulierung in geschlossenen Räumen bestens geeignet.

Die Flammfestigkeit des Akustikputzes kann erhöht werden, wenn der Anteil der als Bindemittel verwendeten Kunstharz-Dispersion herabgesetzt und als weiterer Bestandteil ein Kalisilikat hinzugesetzt wird.

Günstige Zusammensetzungen sind in den Ansprüchen 3 bis 10 und in der unten folgenden Beschreibung angeführt. Ein besonders hohes Schallschlukvermögen in einem breiten Frequenzband ergibt sich jeweils etwa in der Mitte der angegebenen Bereiche.

Es hat sich bewährt, dem Ausgangsmaterial mit bis zu
1 Gew.% einen Schaumbildner zuzusetzen. Dadurch wird die Porösität des Akustikputzes durch zusätzliche Luftlöcher weiter
erhöht und dadurch die Schallschluckfähigkeit gesteigert.

Zweckmäßig wird dem Akustikputz mit bis zu 1 Gew.% eine
Methylcellulose zugesetzt. Das erhöht die Klebekraft des Akustikputzes auf dem Untergrund und in der Putzschicht selbst. Dadurch ist das Auftragen erheblicher Putzstärken in einem einzigen Arbeitsgang möglich.

Weiter können der Masse mit bis zu 10 Gew.% Fasern zugesetzt werden. Besonders zweckmäßig ist die Verwendung von
sehr feinen organischen Fasern. Diese werden in Form einer
Faserpaste zugesetzt. Gut bewährt hat es sich, den Faserzusatz
gewichtsmäßig etwa je zur Hälfte aus Cellulose-Fasern und
der organischen Faserpaste zusammenzusetzen. Dies führt zu
einer Erhöhung der Geschmeidigkeit der Putzmasse und verbessert
damit die Verarbeitbarkeit.

Für die Verarbeitung muß einerseits eine entsprechende
Teigigkeit sichergestellt sein, andererseits eine genügende
Zähigkeit der Masse des Akustikputzes, um das Aufbringen der
gewünschten wirksamen Schichtdicke in einem Arbeitsgangs zu
erlauben. Hierfür wird zweckmäßig Wasser mit bis zu 20 Gew.%
zugesetzt. Mit dem Wasser werden die Methylcellulose, die Faserpaste und die Cellulosenfasern zugesetzt. Bei der Trocknung
des Akustikputzes wird das bei der Verarbeitung vorhandene
Wasser durch Verdampfen ausgetrieben. Erst danach hat der
Akustikputz seine schallschluckenden Eigenschaften.

Im Zusammenhang mit der Verdunstung ist noch auf folgendes
hinzuweisen: Das verwendete Bindemittel und die organische Faserpaste führen zusammen zu einer Hautbildung, die die Verdunstung des Wassers verlangsamt. Eine langsamere Trocknung ist die Folge. Diese gebremste Trocknung führt wieder dazu, daß selbst bei der Verarbeitung des Akustikputzes in erheblichen Schichtdicken Trockenrisse nicht auftreten.

Besonders günstig ist eine Schichtdicke von 25 mm. Diese läßt sich gut verarbeiten. In Anbetracht der Zusammensetzung des Akustikputzes kommt es dabei nicht zu dem gefürchteten Abfallen von Putzpartien. Die Schichtdicke erbringt überdies ein ausgezeichnetes Schallschluckvermögen des getrockneten, harten Akustikputzes.

## Beispiel

Die folgende Zusammensetzung (in Gew.%) hat ausgezeichnete Eigenschaften als Akustikputz erbracht.

| | |
|---|---|
| Expandiertes Silikatgestein (Körnung 3 bis 6 mm) | 17,77 % |
| Expandiertes Alu-Eisen-Magnesium-Silikat | 7,41 % |
| Kunstharz-Dispersion | 53,32 % |
| Methyl-Cellulose | 0,30 % |
| Cellulose-Faser | 2,96 % |
| organische Faserpaste (Baumwollfasern in Lösung) | 2,96 % |
| Schaumbildner | 0,47 % |
| Wasser | 14,81 % |
| Summa | 100.00 Gew.% |

7

Patentansprüche:

1. Akustikputz mit einem Bestandteil in Form expandierten, vulkanischen Silikatgesteins mit einem Bindemittel,
gekennzeichnet durch folgende Bestandteile

   a) expandiertes vulkanisches Silikatgestein einer
      Körnung von mindestens 3 mm,

   b) ein Alu-Eisen-Magnesium-Silikat,

   c) als Bindemittel eine Kunstharz-Dispersion.

2. Akustikputz nach Anspruch 1, gekennzeichnet durch
folgenden zusätzlichen Bestandteil

   d) ein Kalisilikat.

3. Akustikputz nach Anspruch 1 oder 2, dadurch gekennzeichnet, daß das vulkanische Silikatgestein in 10 bis 30
Gew.%, das Alu-Eisen-Magnesium-Silikat in 3 bis 15 Gew.%,
die Kunstharz-Dispersion in 10 bis 60 Gew.%, Rest Kalisilikat
und/oder andere Zuschlagstoffe.

4. Akustikputz nach einem der Ansprüche 1 bis 3,
dadurch gekennzeichnet, daß weiter ein Schaumbildner mit
bis zu 1 Gew.% zugesetzt ist.

5.  Akustikputz nach einem der Ansprüche 1 bis 4, dadurch gekennzeichnet, daß weiter Methylcellulose mit bis zu 1 Gew.% zugesetzt ist.

6.  Akustikputz nach einem der Ansprüche 1 bis 5, dadurch gekennzeichnet, daß weiter Fasern mit bis zu 10 Gew.% zugesetzt sind.

7.  Akustikputz nach Anspruch 6, dadurch gekennzeichnet, daß der Faserzusatz gewichtsmäßig etwa je zur Hälfte aus Cellulose-Fasern und einer organischen Faserpaste besteht.

8.  Akustikputz nach einem der Ansprüche 4 bis 7, dadurch gekennzeichnet, daß Wasser mit bis zu 20 Gew.% zugesetzt ist.

9.  Akustikputz nach den Ansprüchen 1 bis 8, gekennzeichnet durch folgende Zusammensetzung in Gew.%

| | |
|---|---|
| Expandiertes Silikatgestein (Körnung 3 bis 6 mm) | 17,77 % |
| Expandiertes Alu-Eisen-Magnesium-Silikat | 7,41 % |
| Kunstharz-Dispersion | 53,32 % |
| Methyl-Cellulose | 0,30 % |
| Cellulose-Faser | 2,96 % |
| organische Faserpaste (Baumwollfasern in Lösung) | 2,96 % |
| Schaumbildner | 0,47 % |
| Wasser | 14,81 % |
| Summa | 100,00 Gew.% |

- 9 -

10. Akustikputz nach einem der Ansprüche 1 bis 9, dadurch gekennzeichnet, daß er in einer Schichtdicke von 25 mm vorliegt.